# EUROPEAN PATENT APPLICATION

(11) **EP 1 623 753 A2**
(43) Date of publication of application: **08.02.2006**
(21) Application number: 04729980.5
(22) Date of filing: 28.04.2004
(51) Int. Cl.: B01F 1/00

(54) **AUTOMATIC OXIDATION-REDUCTION TREATMENT SYSTEM COMPRISING DISSOLUTION OF HYDROGEN GAS OR OXYGEN GAS IN STATE OF COLLOID SOLUTION UNDER REDUCED PRESSURE AND UNDER PRESSURE**

(30) Priority: 28.04.2003 JP 2003158698
(71) Applicant: Yugen Kaisya Joho Kagaku Kenkyusyo, Kamoto-gun, Kumamoto 861-0134 (JP)
(72) Inventor: Kamimura, Chikashi, Kamoto-gun, Kumamoto 8610134 (JP)
(74) Representative: Schäfer, Matthias W.
(86) International application number: PCT/JP2004/005660
(87) International publication number: WO 2004/096419

(57) **Abstract**

An automatic oxidation-reduction treatment system, **characterized in that** it comprises introducing oxygen or hydrogen to a agitation vessel under reduced pressure through a nozzle to feed the gas into a solution having a reduced pressure and reduce the size of a bubble by agitation under reduced pressure, subjecting the resultant solution to high speed agitation by means of a water-jet pump under reduced pressure to further reduce the size of a bubble, and rapidly feeding the resultant bubbles into an agitation vessel under pressure to dissolve the bubble while still further reducing the size of a bubble under pressure by instantaneously cutting and pressing it, thereby convert the solution into a colloidal state. The above system allows the achievement of a strong oxidative or reductive action in a short time and continuation of the action stably for a long period of time, due to the oxidation or reduction in the state of a gas-liquid colloid by oxygen or hydrogen, which results in the treatment being free from imbalance or unevenness, leading to, for example, the easiness and simplicity in the removal of iron rust. As a result, the system can be suitably used in the fields requiring an oxidation treatment, such as steel, shipbuilding, automobile, ceramics, cement, foods, environment; medical care and ocean, and, in a field requiring the reduction treatment of an oxygen colloid, the system can provide a treated fluid containing a reduced colloid in a maximum amount as much as 6 tones per minute.

## Description

### Field of the Invention

This invention relates to a system for raising a reactivity of hydrogen gas or oxygen gas in a liquid by super-saturation and accelerating a reductive treatment with hydrogen gas or an oxidative treatment with oxygen gas.

### Background of the Invention

At a production site of steels and rolled steel plates, a large amount of water is used for processing hot molding steel materials. Industrial water used for this purpose is generally in an oxidative state ― that is, at a high oxidation-reduction potential (Eh) ― and oxidizes steels at the time of cooling. If reduced water is used instead, it can prevent oxidation and improve the quality of steels produced.

In automobiles and other iron and steel products, a surface of iron is treated of rust removal by an antirust liquid or coated with an antirust painting, instead of by usual washing with water. In this case, reduced water makes trivalent iron in iron rusts transformed to divalent iron and dissolved in the water. Because a surface of iron can be easily cleaned by washing and be protected from oxidation during the time when the surface is dried after washing, antirust painting becomes very smooth. When a car is washed with reduced water, iron rusts are immediately dissolved in it by being transformed to divalent iron, and the surface of the iron becomes clean. Thereby, re-oxidation after drying and also progress of the rusts are prevented.

As an environmental pollution of ocean, a wide area of sea bottom, where a large amount of sludge is accumulated, is in a reduced condition due to a lack of oxygen. A similar phenomenon occurs in many lakes and ponds such as Lake Biwa and Kasumigaura in Japan. Oxidation treatment of this invention has an advantage that it can be applied to any site in a large scale so as to bring about a great effect for purifying water in areas of sea bottom, lakes and rivers, where oxygen is insufficient or a large amount of sludge is accumulated.

Also, if this invention is applied to fish cultivating industries, in which aeration is performed on a water surface with vane wheels, a mass cultivation becomes possible, as a living condition for fishes can be maintained properly even in a very densely populated state of fishes.

This applicant has filed an application entitled "A Method and a Manufacturing Device of Reductive Hydrogen Water for Foods" (Japanese Unexamined Published Patent Application No. H8-56632). This method or device saturates a solution with hydrogen gas after de-aeration of the solution by a batch system.

Additionally, the applicant has filed an application entitled "A Device for Continuous Supply of a Large Amount of Hydrogen Saturated Water to Washing Water, Bathing Water, and the Like" (Japanese Unexamined Published Patent Application No. 2000-354696). This device increases cleaning ability of water by making hydrogen molecules easily penetrated in spaces between water molecules as a result of water clusters divided into smaller sizes and water molecules isolated from each other.

Furthermore, the applicant has filed an application entitled "A Method for Producing a Gas-Dissolved Liquid Medium, and a System for Producing a Gas-Dissolved Liquid Medium" (Japanese Unexamined Published Patent Application No. 2003-019426). By this method or system, a flow rate of hydrogen gas or oxygen gas is optimized by signals of an oxidation-reduction potential transmitted to a central processing unit.

Any of the above-mentioned methods, however, is to adjust strengths of reduction or oxidation within a range of saturation of hydrogen gas or oxygen gas. The above-mentioned methods are not to create a supersaturated condition of hydrogen gas or oxygen gas in which the gas exists in a colloidal state in a liquid and a strong reducing or oxidizing power is brought about, as can be seen in this invention.

A technique in which micro air bubbles are generated in water is known as a similar technique to this invention. However, oxidation-reduction potential (Eh) of the water containing the micro air bubbles is in a range of +200 mV to +300 mV, which is not so high as of +600 mV of a oxygen colloid solution in this invention, and not so low as of -600 mV of a hydrogen colloid solution in this invention.

Strong oxidation and reduction in a solution can be attained only by a processing device of this invention, which assures, in addition, safety for living bodies.

### Disclosure of the Invention

In order to solve the above mentioned problems, the present invention provides an automatic oxidization/reduction treatment system that enhances reductive reactivity or oxidative reactivity in a liquid by producing a hydrogen colloidal solution or an oxygen colloidal solution as well as by dissolving hydrogen gas or oxygen gas into the liquid. The treatment is carried out by steps comprising a reduced-pressure processing unit, a vigorous stirring processing unit, and a high-pressure processing unit after injecting hydrogen gas or oxygen gas in the liquid. The hydrogen colloidal solution or the oxygen colloidal solution of the present invention is confirmed to be more reductive or oxidative, and also to keep high reactivity for a longer time than usual dissolution of the gas.

The automatic oxidization/reduction treatment system of this invention contains at least steps of injecting hydrogen gas or oxygen gas in a liquid of a reduced-pressure vessel through a nozzle, dividing bubbles produced into tiny ones in the course of treatment of vigorous stirring and pressure changes in the above mentioned units to produce the colloidal solution.

### Brief Description of the Drawings

Fig. 1 is a perspective view of equipment of this invention seen diagonally from the front right side.
Fig. 2 is an exploded perspective view of the equipment of this invention seen diagonally from the front right side.
Fig. 3 is a front view of the equipment of this invention.
Fig. 4 is an exploded front view of the equipment of this invention.
Fig. 5 is an exploded back view of the equipment of this invention.
Fig. 6 is an exploded right side view of the equipment of this invention.
Fig. 7 is an exploded left side view of the equipment of this invention.
Fig. 8 is an exploded top view of the equipment of this invention.
Fig. 9 is a perspective view of a reduced-pressure stirring vessel and a high-pressure stirring vessel seen from the front.
Fig. 10 is an exploded perspective view of the reduced-pressure stirring vessel and the high-pressure stirring vessel seen from the front.
Fig. 11 is a front view of the reduced-pressure stirring vessel and the high-pressure stirring vessel.
Fig. 12 is an exploded front view of the reduced-pressure stirring vessel and the high-pressure stirring vessel.

### Explanation of the Reference Codes and Numbers

### <Supply and processing of liquid>

A: inlet (for introduction of a liquid)
B: reduced-pressure adjust-valve
C: (liquid flow) pipe (to a reduced-pressure stirring vessel D)
D: reduced-pressure gauge
E: reduced-pressure stirring vessel
F: (liquid flow) pipe (to a mixing-pump G)
G: high-speed mixing-pump
H: (liquid flow) pipe (from the mixing-pump G)
I: pipe (to a high-pressure stirring vessel J)
J: high-pressure stirring vessel
K: (liquid flow) pipe (from the high-pressure stirring vessel J to a high-pressure adjust valve M)
L: high-pressure gauge
M: high-pressure adjust valve
N: (liquid flow) pipe (from the high-pressure adjust valve M to a liquid flow meter O)
O: liquid flow meter
P: outlet (for discharge of a gas-liquid mixture)

### <Gas control assembly and automation system>

1: power switch
2: motor (for the high-speed mixing-pump G)
3: gas cylinder
4: (gas cylinder) opening valve
5: pressure gauge
6: gas-pressure setting valve
7: gas-pressure regulating valve
8: gas on-off valve
9: (gas flow) pipe(from the gas on-off valve 8 to a gas filter 11)
10: (gas flow) pipe
11: gas filter
12: (gas flow) pipe (from the gas filter 11 to a gas flow meter 14)
13: gas flow adjust dial
14: gas flow meter
15: (gas flow) pipe (from the gas flow meter 14 to a gas control device 17)
16: coil connecting between a sequencer built in the liquid flow meter O and a gas control device 17
17: gas control device
18: (gas flow) pipe (to a gas supply nozzle 23)
19: joint section of the gas flow pipe 18
20: fixing device
21: housing (for the automatic oxidization/reduction treatment system)
22: wheel
23: gas supply nozzle
24: blades (baffle plates)
25: housing (for the reduced-pressure stirring vessel E and the high-pressure stirring vessel J)
26: cap (for the reduced-pressure stirring vessel E and the high-pressure stirring vessel J)
27: arrow (indicating a direction of flow)
28: spiral-flow

### Description of the Preferred Embodiments

The automatic oxidization/reduction treatment system of this invention comprises a liquid processing assembly which controls liquid flow and makes a liquid contacted to a gas, and a gas processing assembly which controls gas flow to be injected into the liquid. The invention is hereafter described with reference to the accompanying drawings.

### <Supply and processing of liquid>

The liquid processing assembly comprises a reduced-pressure processing unit, a vigorous-stirring processing unit, a high-pressure processing unit, and an automatic liquid control unit.

In the reduced-pressure processing unit, a liquid introduced at an inlet A is flowed to a mixing-pump G through a pipe C having a reduced-pressure gauge D, and a reduced-pressure stirring vessel E. At the top of the reduced-pressure stirring vessel E, hydrogen gas or oxygen gas is injected to produce a first gas-liquid mixture.

In the vigorous stirring unit, the first gas-liquid mixture is agitated further by the high-speed mixing pump G to produce a second gas-liquid mixture.

In the high-pressure processing unit, the second gas-liquid mixture is flowed to a high-pressure adjust valve M via a pipe H, a high-pressure stirring vessel J and a pipe K having a high-pressure gauge L.

In the automatic liquid control unit, an on-off signal of the gas flow is conveyed to a gas control device 17, depending on a flow rate of the gas-liquid mixture from the high-pressure adjust valve M to an outlet P via a pipe N and a liquid flow meter O.

### <Gas control assembly and automation system>

The gas control assembly comprises a gas supply unit, a gas flow regulating unit, and an automatic gas control unit.

In the gas supply unit, a gas from an opening valve 4 on a gas cylinder 3 is flowed to a gas filter 11 via a pressure gauge 5 on the gas cylinder 3, a gas-pressure setting valve 6 linked to a gas-pressure regulating valve 7, a gas on-off valve 8, and a pipe 9.

In the gas flow regulating unit, the gas filter 11 that makes the gas clean and a flow-adjust-dial 13 linked to a gas flow meter 14 are provided.

In the automatic gas control unit, the gas-flow control device 17 is operated by a signal from the liquid flow meter O via a sequencer (or a relay) built in the liquid flow meter O, and on-off of the gas-flow at a gas-supply nozzle 23, which is connected to a gas line 18 and opened to the reduced-pressure stirring vessel E, is determined.

### <Structure of reduced-pressure stirring vessel and high-pressure stirring vessel>

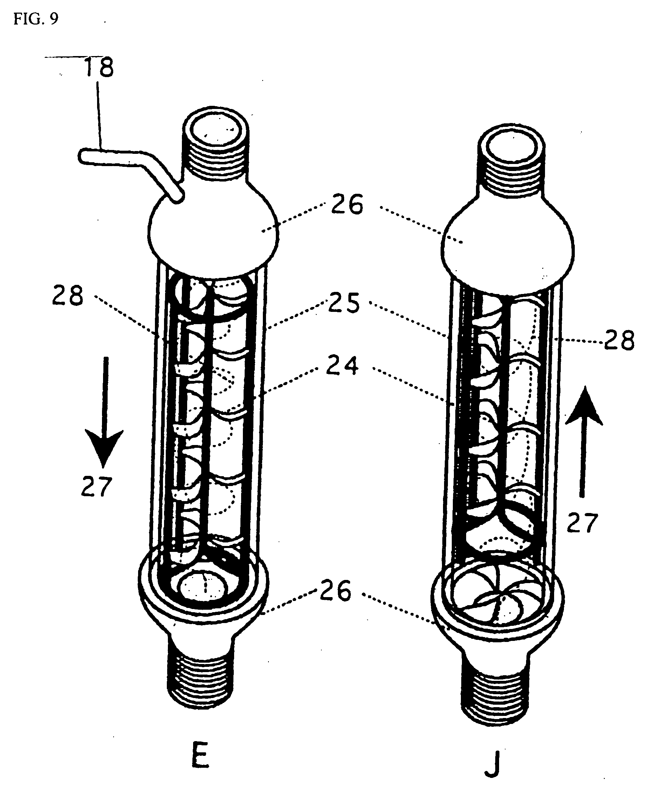

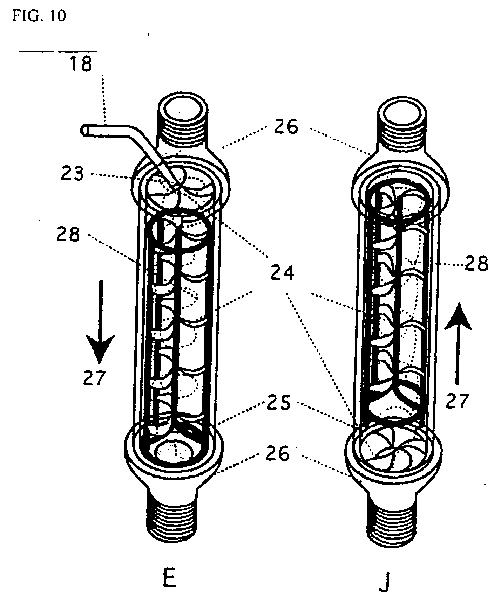

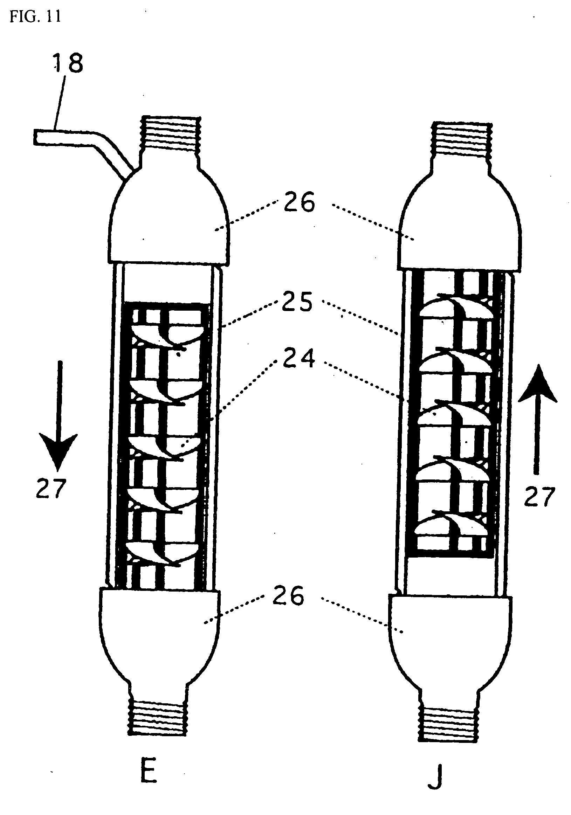

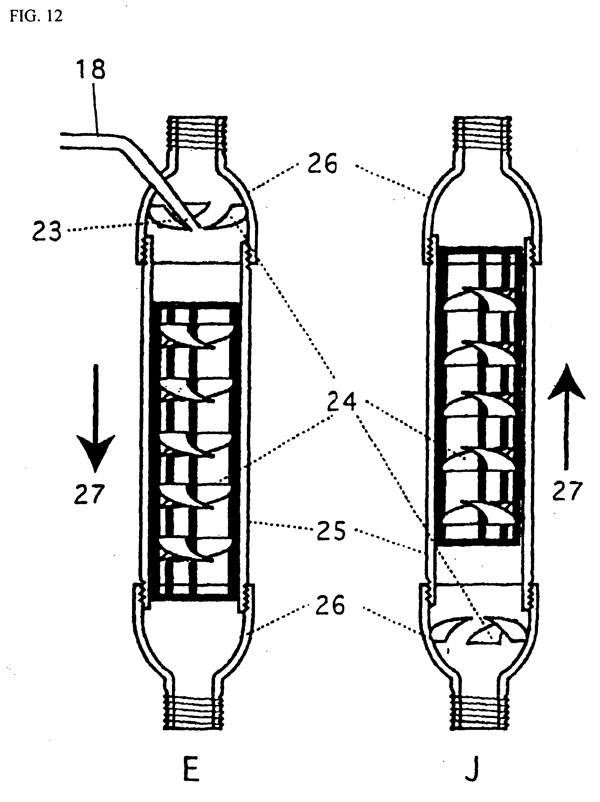

Appearances and structures of the reduced-pressure stirring vessel E and the high-pressure stirring vessel J are shown in Figs. 9-12.

Each of the reduced-pressure stirring vessel E and the high-pressure stirring vessel J is composed of a housing 25 of clear acrylic resin and a cap 26 of steel or stainless steel. Each inside of the reduced-pressure stirring vessel E and the high-pressure stirring vessel J is a stirring zone. Direction of a liquid flow is indicated by an arrow 27 in Figs. 9-12. On the top of the reduced-pressure stirring vessel E, the gas supply nozzle 23 is provided for the purpose of injecting the gas from the flow-adjust-dial 13 in the liquid. The gas-liquid mixture (the first gas-liquid mixture) in the reduced-pressure stirring vessel E is then stirred changeably in five stages by spiral-flow-generating blades (baffle plates) 24 so as to make a spiral flow 28 and, at the same time, gas bubbles in the mixture are further finely divided under a condition of reduced pressure.

The high-pressure stirring vessel J also has spiral-flow-generating blades (baffle plates) 24 in it. Under a high pressure condition, bubbles in the gas-liquid mixture (the second gas-liquid mixture) are compressed by the high pressure and are divided more finely or homogenized by the spiral flow.

### <The method of automatic oxidization/reduction system>

A practical operation of the above mentioned oxidization/reduction system is explained below. The gas is supplied by an operation of opening the valve 4 attached to the gas cylinder 3, after confirming the pressure gauge 5 attached to the gas cylinder 3, and regulating the gas-pressure setting valve 6 referring to the gas-pressure regulating valve 7 and opening the gas on-off valve 8.

Liquid is introduced into the system by the operation of opening the reduced-pressure adjust-valve B and the high-pressure regulating valve M, and then of inputting a power switch 1 to move a motor 2.

Gas flow is adjusted to a desired level by regulating the reduced-pressure gauge D and the reduced-pressure adjust-valve B and also by regulating the high-pressure gauge L and the high-pressure adjust-valve M and opening the flow adjust-dial 13 attached to the flow meter 14.

When the liquid flow and the gas flow are set up at their own desired levels, the oxidization/reduction system automatically starts its operation by the signals from sensors linked to on-and-off of the liquid supplied and conducts the three stages of reduced-pressure stirring, vigorous stirring and high-pressure stirring subsequently to produce a reductive colloidal solution when hydrogen gas is used or an oxidative colloidal solution when oxygen gas is used.

The liquid supplied to the oxidization/reduction system is any of cooling water of steel mill processes, processing water of food industry, drink water, tap water, underground water, long-term transporting or preservative water, treated waste water flowed to dams, river water, lake water, sea water and others.

When the reductive hydrogen colloidal solution is applied to cooling water of steel mill processes, it contributes to prevent oxidation of hot steel at flash cooling, and to improve surface quality of the steel.

When the reductive hydrogen colloidal solution is applied to a composition of concrete, some oxidative compositions including CaO are reduced, and the reductive condition is held trapped inside of the concrete to prevent corrosion and expansion of steel frameworks, which contributes to a long-life of the concrete.

When the reductive hydrogen colloidal solution is applied to cleaning for rust removal, corrosion prevention or other cleaning, Fe⁺³ of rust on the surface of metals is reduced to Fe⁺², which is more soluble to water, to make the cleaning easier and economical.

When the reductive hydrogen colloidal solution is applied to foods processing water, foods are protected from oxidation. Vitamins, enzymes and other functional elements are held stable against oxidative decomposition. The foods produced achieve high yield, high quality and long preservation.

When the reductive hydrogen colloidal solution is applied to drink water, tap water, underground water, long-term transporting or preservative water, growth of microorganisms in the water can be prevented and the water is held free from biological decay and can be stored for a long time. This makes it possible to correspond to the needs for long-term storage of water under the global shortage of water.

When the reductive hydrogen colloidal solution is applied to treated waste water flowed to dams, river water, lake water or sea water, it helps the water recovered from a lack of oxygen owing to the accumulated sludge on the bottom and contributes to improvement of the global environmental conditions.

### Examples

Embodiments of the reductive treatment using hydrogen colloidal solution of the above mentioned system and the oxidative treatment using oxygen colloidal solution of the above mentioned system are described below.

### Example 1:

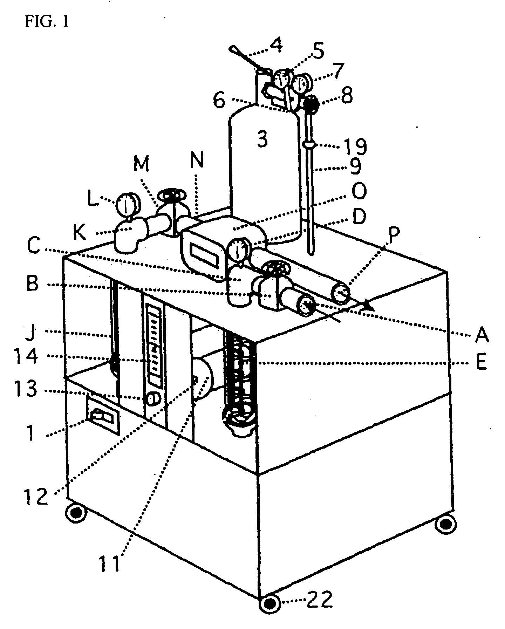

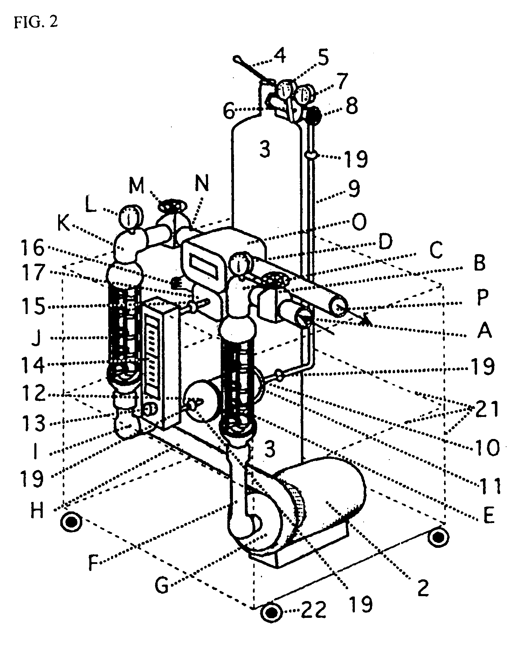

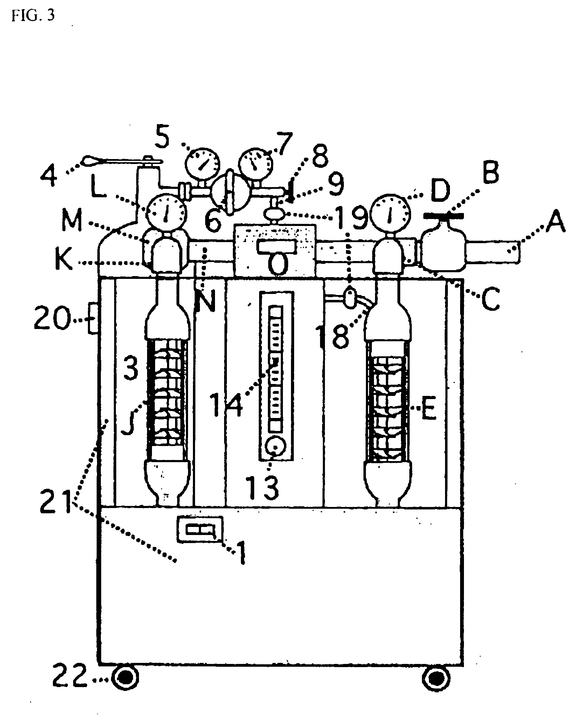

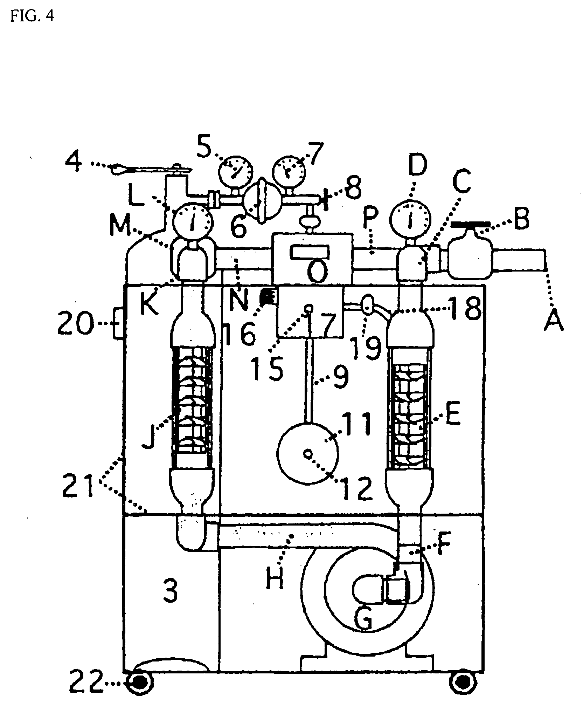

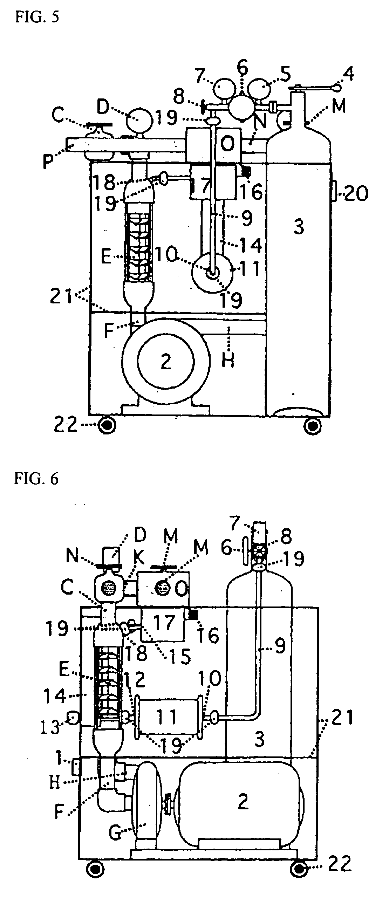

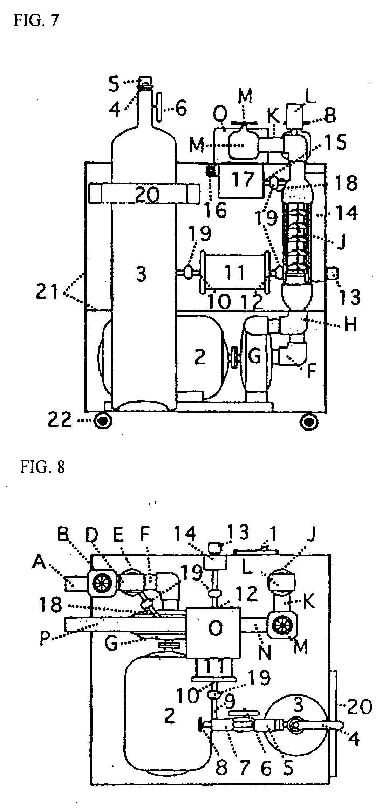

a) A hydrogen colloidal solution by the system shown in Figs. 1-8 and usual hydrogen saturated water were compared. In this test, a mini centrifugal pump of outer diameter 150 mm, rotator radius 50 mm, inlet diameter 5 mm and outlet diameter 5 mm was used as a high-speed mixing pump. A motor for the pump is of diameter 130 mm, voltage 100 V, current 5 A, output 0.1 kW and rotation 1400 rpm.
The reduced-pressure stirring vessel had a housing of acrylic resin of diameter 4 cm and length 30 cm and made a flow in spiral by five baffle plates of the spiral-flow-generation device under a reduced-pressure adjusted by the reduced-pressure regulating valve. The high-pressure stirring vessel had also a housing of acrylic resin of diameter 4 cm and length 30 cm and made a flow in spiral by five baffle plates of the spiral-flow-generation device under a high-pressure adjusted by the high-pressure regulating valve.
b) Test conditions:
Hydrogen gas was treated with water by the following 3 ways:
1. Conventional slow bubbling of hydrogen gas into water stirring with a stirrer in a beaker to the saturation.
2. Stirring of water with injected hydrogen gas until the saturation in a vessel under a reduced-pressure and under a high-pressure in succession by a conventional oxidization/reduction system.
3. Hydrogen colloidal solution, produced by the oxidation/reduction treatment system of this invention in a series of steps, that is, the reduced-pressure stirring, the vigorous stirring, and the high-pressure stirring.

Oxidation-reduction potential (Eh) was measured for each of the waters. The results are shown in Table 1.
c) Results:

**[Table 1] Changes in oxidation-reduction potential (Eh) of tap water during a reductive treatment by hydrogen gas (mV)**

| Processing Method | Time after the Start (min.) | | | | |
|---|---|---|---|---|---|
| | 0 | 1 | 5 | 10 | 30 |
| 1. Direct Bubbling | 485 | -245 | -286 | -302 | -310 |
| 2. Conventional Oxidization/Reduction System | 490 | -360 | -495 | -584 | -600 |
| 3. Oxidization-Reduction Processing by This Invention | 490 | -620 | 660 | -695 | -701 |

As can be seen in Table 1, the potential of the water by the usual slow bubbling was a level of -300 mV, and that of the water by the conventional oxidization/reduction system was -600 mV. In the case of the water by this invention, on the other hand, the potential went as far as -700 mV, which showed higher reducing power than other waters. In addition, the low potential was attained in a shorter time than the others.

This high reducing power was assumed to depend on the fine colloidal hydrogen dispersed in water rather than the dissolved hydrogen. Even in the conventional oxidization/reduction systems, similar reducing power might have been obtained to some extent, but the conventional oxidization/reduction systems did not produce so much colloidal hydrogen as this invention.

### Example 2:

### a) Test conditions:

Each of the waters produced by 1) conventional bubbling, 2) the conventional oxidization/reduction system, and 3) the oxidization/reduction system of this invention was exposed to air in a beaker. The oxidation-reduction potential (Eh) was measured at predetermined intervals. The results are shown in Table 2.

### b) Results:

**[Table 2] Changes in oxidation-reduction potential (Eh) of tap water after a reductive treatment (mV)**

| Processing Method | Time (hr.) | | | | |
|---|---|---|---|---|---|
| | 0 | 1 | 2 | 12 | 24 |
| 1. Direct Bubbling | -230 | -225 | -145 | -52 | 120 |
| 2. Conventional | | | | | |
| Oxidization/Reduction | -600 | -585 | -525 | -350 | -50 |
| System | | | | | |
| 3. Oxidization-Reduction Processing by This Invention | -701 | -700 | -695 | -550 | -480 |

As can be seen in Table 2, the potential of the water in the case of usual direct bubbling was a level of -300 mV at the start and it increased to +120 mV within 24 hours. Even in the case of the conventional oxidization/reduction system, the potential increased from -600 mV to -50 mV within 24 hours. By using the oxidization-reduction treatment system of this invention, on the other hand, it increased from a level of -700 mV to -480 mV, which was at a lower potential than others.

The small increase of the potential in the present invention was assumed to owe to the fact that the colloidal hydrogen produced by this invention was well enough dispersed in water to suppress the effect of oxygen dissolved from air. Even in the conventional oxidization/reduction systems, partly similar effect might have been obtained, though not enough.

### Example 3:

a) The oxygen colloidal solution by this invention and the usual oxygen saturated water were compared. The test conditions were similar to the above mentioned examples.
b) Test conditions:
Oxygen gas was treated with water by the following 3 ways:
1. Conventional slow bubbling of oxygen gas into water stirring with a stirrer in a beaker to the saturation.
2. Stirring of water with injected oxygen gas until the saturation in a vessel under a reduced pressure and under a high pressure in succession by the conventional oxidization/reduction system.
3. Oxygen colloidal solution produced by the oxidation/reduction treatment system of this invention in a series of steps, that is, the reduced-pressure stirring, the vigorous stirring, and the high-pressure stirring.

The oxidation-reduction potential (Eh) was measured for each of the waters. The results are shown in Table 3.
c) Results:

**[Table 3] Changes in oxidation-reduction potential (Eh) of tap water during an oxidative treatment by oxygen gas (mV)**

| Processing Method | Time after the Start (min.) | | | | |
|---|---|---|---|---|---|
| | 0 | 1 | 5 | 10 | 30 |
| 1. Direct Bubbling | 485 | 496 | 512 | 535 | 540 |
| 2. Conventional Oxidization/Reduction System | 490 | 565 | 580 | 600 | 610 |
| 3. Oxidization-Reduction Processing by This Invention | 490 | 620 | 640 | 640 | 640 |

As can be seen in Table 3, the potential of the water by the usual slow bubbling was a level of +540 mV, and that of the water by the conventional oxidization/reduction system was +610 mV. In the case of the water by this invention, on the other hand, the potential went as far as +640 mV, which showed higher oxidizing power than other waters. In addition, the high potential was attained in a shorter time than the others.

This high oxidizing power was assumed to depend on the fine colloidal oxygen dispersed in water rather than the dissolved oxygen. Even in the conventional oxidization/reduction systems, similar oxidizing power might have been obtained to some extent, though not so much colloidal oxygen was produced.

### Example 4:

### a) Test conditions:

Each of the waters produced by 1) conventional bubbling, 2) the conventional oxidization/reduction system, and 3) the oxidization/reduction system of this invention was exposed to air in a beaker. The oxidation-reduction potential (Eh) was measured at predetermined intervals. The results are shown in Table 4.

### b) Results:

**[Table 4] Changes in oxidation-reduction potential (Eh) of tap water after an oxidative treatment (mV)**

| Processing Method | Time (hr.) | | | | |
|---|---|---|---|---|---|
| | 0 | 1 | 2 | 12 | 24 |
| 1. Direct Bubbling | 540 | 505 | 495 | 585 | 478 |
| 2. Conventional Oxidization/Reduction System | 610 | 600 | 590 | 580 | 570 |
| 3. Oxidization-Reduction Processing by This Invention | 640 | 635 | 630 | 625 | 620 |

As can be seen in Table 4, the potential of the water in the case of usual direct bubbling was a level of +540 mV at the start and it decreased to +478 mV within 24 hours. Even in the case of the conventional oxidization/reduction system, the potential decreased from +610 mV to +570 mV within 24 hours. By using the oxidization-reduction treatment system of this invention, on the other hand, it decreased from a level of+640 mV to +620 mV, which was at a higher potential than others.

The small decrease of the potential in the present invention was assumed to owe to the fact that the colloidal oxygen produced by this invention was well enough dispersed in water to become an additional source of oxygen dissolved in water. Even in the conventional oxidization/reduction systems, a partly similar effect might have been obtained, though not enough.

### Industrial Applicability

As mentioned above, this invention provides an automatic oxidation/reduction treatment system that produces a stable gas-colloidal solution through steps comprising a reduced-pressure processing unit, a vigorous stirring processing unit, and a high-pressure processing unit after injecting hydrogen gas or oxygen gas in the liquid.

The colloidal solution endowed with the strong reductive or oxidative power can work as a reducing agent or an oxidizing agent in variety industrial fields.

The reductive treatment of this invention, due to the high effectiveness in anti-rust and rust-removal treatment for steel, contributes to the quality improvement and cost reduction for automobiles, ships, precision machines, metal moldings, steel mills and other industries. This strong reductive power is effectively used in the concrete industry. Furthermore it can be also applied, together with the ultrasonic treatment, to the cleaning of silicon chips as a new cleaning aid which contributes to cost reduction without any environmental pollution.

The oxidative treatment of this invention, due to the strong oxidative ability, can be applied to environmental improvements including water cleanup of lakes such as Ariake-sea, Shinji-lake, Biwa-lake and Kasumigaura. In fish cultivating industry, it can prevent fish diseases with affecting no harm to the human.

## Claims

1. An automatic oxidization/reduction treatment system that
forms a highly reductive hydrogen colloidal solution from a flowing liquid and hydrogen gas to make said liquid supersaturated with hydrogen in coexistence of said liquid and said hydrogen, comprising
1) a reduced-pressure stirring unit that produces a first hydrogen-liquid mixture by hydrogen gas is injected into said liquid through a nozzle and by the resulting hydrogen-injected-liquid is spirally rotated with baffle plates in said reduced-pressure vessel,
2) a vigorous stirring unit that produces a second hydrogen-liquid mixture by said first hydrogen-liquid mixture is stirred with a high speed pump, and
3) a high-pressure stirring unit that produces said highly reductive hydrogen colloidal solution by said second hydrogen-liquid mixture is spirally rotated with baffle plates in a high-pressure vessel.

2. An automatic oxidization/reduction treatment system that
forms a highly oxidative oxygen colloidal solution from a flowing liquid and oxygen gas to make said liquid supersaturated with oxygen in coexistence of said liquid and said oxygen, comprising
1) a reduced-pressure stirring unit that produces a first hydrogen-liquid mixture by oxygen gas is injected into said liquid through a nozzle and by the resulting oxygen-injected-liquid is spirally rotated with baffle plates in said reduced-pressure vessel,
2) a vigorous stirring unit that produces a second oxygen-liquid mixture by said first oxygen-liquid mixture is stirred with a high speed pump, and
3) a high-pressure stirring unit that produces said highly oxidative oxygen colloidal solution by said second oxygen-liquid mixture is spirally rotated with baffle plates in a high-pressure vessel.

3. An automatic oxidization/reduction treatment system of claim 1, wherein said hydrogen gas is supplied from any of a hydrogen gas cylinder, an electrolysis of water and a chemical reaction of a metal with an acid solution.

4. An automatic oxidization/reduction treatment system of claim 2, wherein said oxygen gas is supplied from any of a oxygen gas cylinder, an electrolysis of water and an ozone generating device.

5. An automatic oxidization/reduction treatment system of claim 2 or 3, wherein said liquid is any of vegetable oil and animal oil.

6. An automatic oxidization/reduction treatment system that
produces a highly reductive hydrogen colloidal solution or a highly oxidative oxygen colloidal solution after a successive treatment of a reduced-pressure stirring, a vigorous stirring and a high-pressure stirring, comprising
1) a gas processing assembly comprised of (a) a gas supply unit that flows said gas from a gas source described in claim 3 or claim 4, and (b) a gas flow regulating unit that adjusts the amount of said gas by a pressure gauge, a gas filter and a gas flow meter and a needle valve linked to said gas flow meter,
2) a liquid processing assembly composed of (c) a reduced-pressure stirring unit that introduces said liquid and controls the amount of said liquid by a reduced-pressure valve, a reduced-pressure gauge and a liquid flow meter, a vigorous stirring unit and (d) a high-pressure stirring unit that controls the amount of finished said highly reductive hydrogen colloidal solution or said highly oxidative oxygen colloidal solution with a high-pressure valve and a reduced-pressure gauge, and
3) an automatic control unit that combines said gas processing assembly and said liquid processing assembly by receiving a signal from a liquid flow meter through a sequencer (or a relay) and determining the open or the close of the gas-flow.
